(19) **Europäisches Patentamt**

**European Patent Office**

**Office européen des brevets**

(11) Veröffentlichungsnummer : **0 352 445 B1**

(12) # EUROPÄISCHE PATENTSCHRIFT

(45) Veröffentlichungstag der Patentschrift :
22.01.92 Patentblatt 92/04

(21) Anmeldenummer : **89110007.5**

(22) Anmeldetag : **02.06.89**

(51) Int. Cl.⁵ : **F16K 31/02**

(54) **Elektromagnetisch betätigbares Ventil.**

(30) Priorität : **23.07.88 DE 3825135**

(43) Veröffentlichungstag der Anmeldung :
**31.01.90 Patentblatt 90/05**

(45) Bekanntmachung des Hinweises auf die
Patenterteilung :
**22.01.92 Patentblatt 92/04**

(84) Benannte Vertragsstaaten :
**DE ES FR GB IT**

(56) Entgegenhaltungen :
**DE-A- 1 550 112**
**US-A- 4 453 700**
**US-A- 4 610 080**

(73) Patentinhaber : **ROBERT BOSCH GmbH**
**Postfach 10 60 50**
**W-7000 Stuttgart 10 (DE)**

(72) Erfinder : **Greiner, Max, Dr. Dipl.-Ing.**
**Gartenstrasse 46**
**W-7016 Gerlingen (DE)**
Erfinder : **Reiter, Ferdinand, Dipl.-Ing. (BA)**
**Burgweg 1**
**W-7145 Markgröningen (DE)**
Erfinder : **Babitzka, Rudolf, Dipl.-Ing. (FH)**
**Birkenweg 11**
**W-7141 Kirchberg-Neuhof (DE)**

Jouve, 18, rue Saint-Denis, 75001 PARIS

## Beschreibung

### Stand der Technik

Die Erfindung geht aus von einem elektromagnetisch betätigbaren Ventil nach der Gattung des Hauptanspruches. Es ist bereits ein elektromagnetisch betätigbares Ventil bekannt (US-PS 4610080), bei dem die Magnetspule zur Leitung der Magnetfeldlinien von einem metallenen Ventilgehäuse umgeben ist, das aus ferromagnetischem Material besteht. Hierdurch ergibt sich nicht nur ein hoher Arbeitsaufwand zur Herstellung des metallenen Ventilgehäuses, sondern auch ein großer Durchmesser und ein unerwünscht hohes Gewicht des Ventiles, da die Wandstärke des Ventilgehäuses aus statischen Gründen dicker gefertigt wird, als zur Leitung der Magnetfeldlinien erforderlich ist. Außerdem bilden sich in dem metallenen Ventilgehäuse in unerwünschter Weise Wirbelströme. Weiterhin ist bei dem bekannten Ventil zwischen dem Ventilgehäuse und dem Ventilsitzkörper ein aus Kunststoff gefertigtes Zwischenteil angeordnet, durch welches die Gefahr besteht, daß sich aufgrund von Wärmedehnungen oder Quellungen des Kunststoffes dieses Zwischenteil derart seine Lage verändert, daß die Ventilnadel verklemmt oder sich der zwischen dem Anker und dem Kern vorgesehene Hub der Ventilnadel in unerwünschter Weise ändert.

### Vorteile der Erfindung

Das erfindungsgemäße Ventil mit den kennzeichnenden Merkmalen des Hauptanspruches hat demgegenüber den Vorteil, daß sich die Außenkontur des Ventiles auf einfache Art und Weise leicht den Erfordernissen am Einsatzort des Ventiles anpassen läßt, daß sich das Ventil einfach und kostengünstig und mit kleineren Umfangsabmessungen fertigen läßt und wobei die Anforderungen an die Betriebssicherheit des Ventiles gewährleistet werden. Außerdem wird ein Auftreten von Wirbelströmen am Umfang des Ventiles vermieden.

Durch die in den Unteransprüchen aufgeführten Maßnahmen sind vorteilhafte Weiterbildungen und Verbesserungen des im Hauptanspruch angegebenen Ventiles möglich.

Besonders vorteilhaft ist es, in der Kunststoffummantelung als ferromagnetisches Element wenigstens ein aus ferromagnetischem Material hergestelltes Leitelement so anzuordnen, daß es sich in axialer Richtung über die gesamte Länge der Magnetspule erstreckt und die Magnetspule in Umfangsrichtung wenigstens teilweise umgibt. Hierdurch können besonders geringe Abmessungen des Ventiles und eine kostengünstige Herstellung erzielt werden.

Ebenfalls vorteilhaft ist es, daß das Leitelement sich in radialer Richtung nach innen erstreckende Endabschnitte hat bzw. topfförmig ausgebildet ist.

Weiterhin vorteilhaft ist es zur Verbesserung der Flußübertragung, zusätzlich zu dem wenigstens einen Leitelement Füllstoffe aus ferromagnetischem Material in der Kunststoffummantelung vorzusehen.

Vorteilhaft ist es, daß zwischen einem dem Anker zugewandten Kernende des Anschlußstutzens und dem Ventilsitzkörper wenigstens ein rohrförmiges metallenes Zwischenteil angeordnet ist, daß zur Führung des Ankers dient.

Zusätzlich vorteilhaft ist es, das Zwischenteil aus nichtmagnetischem Material zu fertigen und mit einer Führungsbohrung zur Führung des Ankers zu versehen sowie zwischen dem Zwischenteil und dem Ventilsitzkörper ein aus ferromagnetischem Metall gefertigtes Verbindungsteil dicht anzuordnen, in das der Anker mit Spiel teilweise ragt. Hierdurch läßt sich eine sehr schlanke und starre Verbindung zwischen dem Anschlußstutzen und dem Ventilsitzkörper herstellen.

Vorteilhaft ist es ebenfalls, den Anker sowie ein Verbindungsrohr zum Ventilschließkörper rohrförmig und möglichst dünnwandig auszugestalten, so daß sich möglichst geringe durch das Elektromagnetfeld zu bewegende Massen ergeben.

Ebenfalls vorteilhaft ist es, das Zwischenteil aus nichtmagnetischem Blech derart zu fertigen, daß es koaxial zur Ventillängsachse verlaufend einen ersten Verbindungsabschnitt und einen zweiten Verbindungsabschnitt mit größerem Durchmesser hat und den ersten Verbindungsabschnitt durch einen sich radial nach außen erstreckenden Kragen mit dem zweiten Verbindungsabschnit zu verbinden. Hierdurch läßt sich das Zwischenteil leicht als Tiefziehteil herstellen. In weiterer vorteilhafter Weise ist der erste Verbindungsabschnitt des Zwischenteiles dicht mit dem Kernende des Anschlußstutzens und der zweite Verbindungsabschnitt dicht mit einem rohrförmigen Verbindungsteil verbunden, das mit einer Stirnfläche am Kragen anliegt und aus ferromagnetischem Material gefertigt ist und eine Gleitbohrung hat, in die der Anker ragt und durch die der Anker geführt wird, während andererseits mit dem Verbindungsteil der Ventilsitzkörper verbunden ist.

In vorteilhafter Weise ist am Kernende des Anschlußstutzens dem Anker zugewandt ein ringförmiger, schmaler Anschlagbund ausgebildet.

### Zeichnung

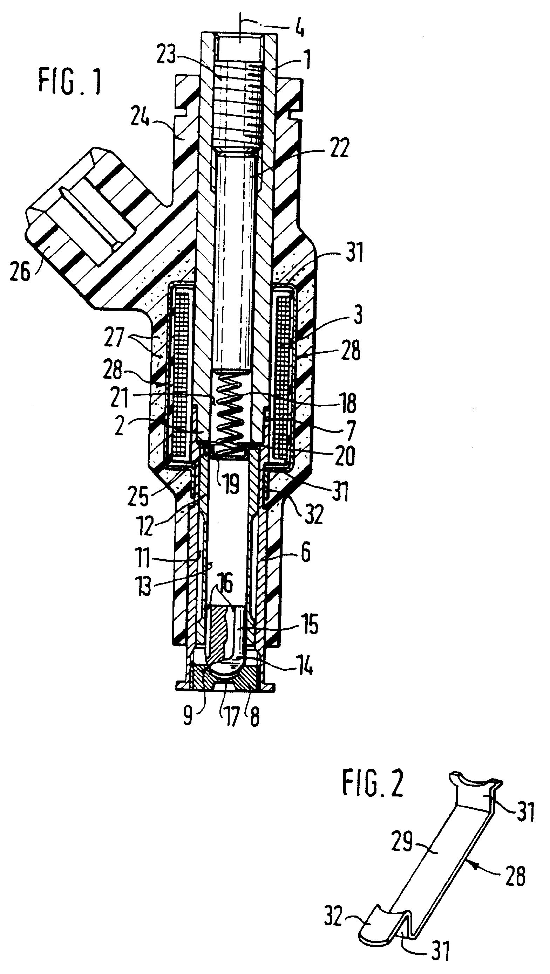

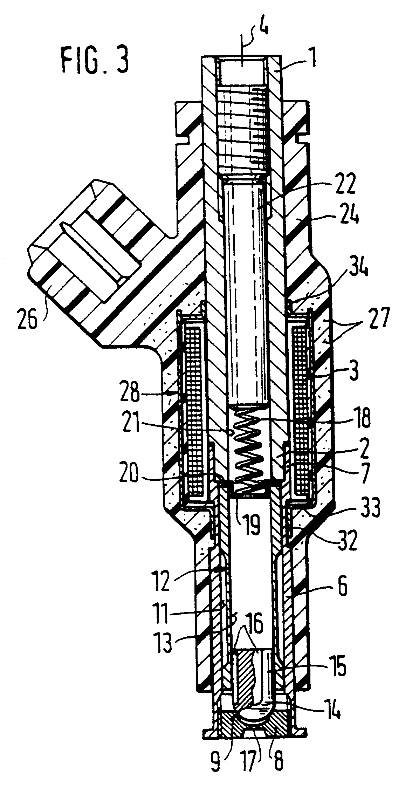

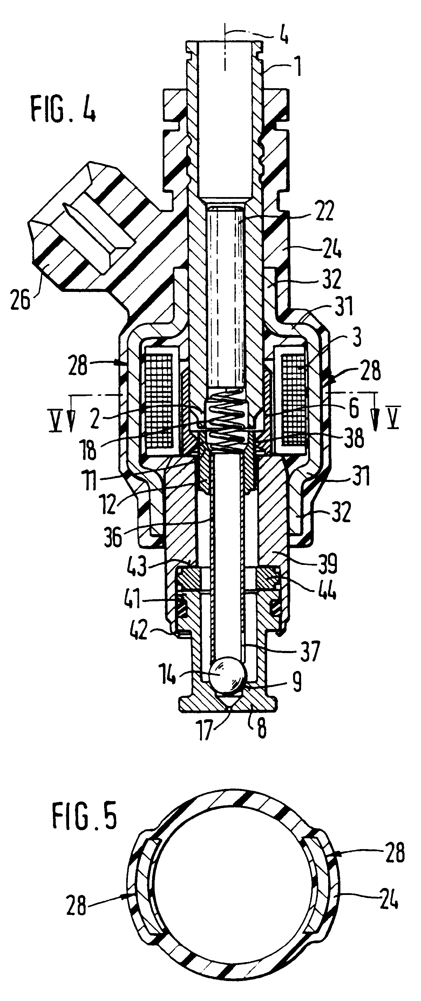

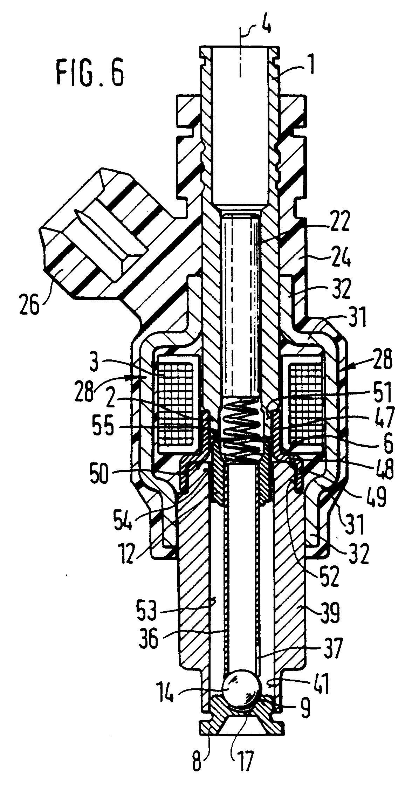

Ausführungsbeispiele der Erfindung sind in der Zeichnung vereinfacht dargestellt und in der nachfolgenden Beschreibung näher erläutert. Es zeigen Figur 1 ein erstes Ausführungsbeispiel eines erfindungsgemäß ausgestalteten Ventils, Figur 2 ein Leitelement in Einzeldarstellung, Figur 3 ein zweites und Figur 4 ein drittes Ausführungsbeispiel eines erfindungsgemäß ausgestalteten Ventiles, Figur 5 einen Schnitt entlang der Linie V-V in Figur 4, Figur 6 ein viertes Ausführungsbeispiel eines erfindungsgemäß ausgestalteten Ventiles.

Beschreibung der Ausführungsbeispiele

Das in der Figur 1 beispielsweise dargestellte elektromagnetisch betätigbare Ventil in Form eines Einspritzventiles für Kraftstoff als Aggregat einer Kraftstoffeinspritzanlage einer gemischverdichtenden fremdgezündeten Brennkraftmaschine hat einen rohrförmigen metallenen Anschlußstutzen 1 aus ferromagnetischem Material, auf dessen unterem Kernende 2 eine Magnetspule 3 angeordnet ist. Der Anschlußstutzen 1 dient somit zugleich als Kern. Anschließend an das Kernende 2 des Anschlußstutzens 1 ist konzentrisch zur Ventillängsachse 4 dicht mit dem Anschlußstutzen 1 ein Zwischenteil 6 verbunden, beispielsweise durch Verlöten oder Verschweißen. Das Zwischenteil 6 ist aus nichtmagnetischem Metall gefertigt und umgreift beispielsweise mit einem Bund 7 das Kernende 2. Dem Anschlußstutzen 1 abgewandt ist mit dem Zwischenteil 6 ein metallener Ventilsitzkörper 8 verbunden, der dem Kernende 2 des Anschlußstutzens 1 zugewandt einen festen Ventilsitz 9 aufweist. Die Verbindung zwischen dem Zwischenteil 6 und dem Ventilsitzkörper 8 ist ebenfalls dicht ausgeführt, sie kann beispielsweise durch eine Verschraubung, Verschweißung oder Verlötung erfolgen. Die Aneinanderreihung von Anschlußstutzen 1, Zwischenteil 6 und Ventilsitzkörper 8 stellt eine starre metallene Einheit dar. Das Zwischenteil 6 ist rohrförmig ausgebildet und besitzt eine koaxiale Führungsbohrung 11, in die sich ein Anker 12 erstreckt, der durch die Führungsbohrung während seiner Verschiebebewegung geführt wird und rohrförmig ausgebildet ist. In einer Innenbohrung 13 des Ankers 12 ist an seinem dem Ventilsitz 9 zugewandten Ende ein Ventilschließkörper 14 angeordnet und mit diesem verbunden, der beispielsweise die Form eines Zylinderabschnittes 15 mit einem halbkugelförmigen Ende oder eine andere Form haben kann. Am Umfang des Zylinderabschnittes 15 des Ventilschließkörpers 14 sind nach außen führende Abflachungen 16 vorgesehen, über die vom Anschlußstutzen 1 her zuströmender Kraftstoff den Anker 12 innen durchströmend aus der Innenbohrung 13 zum Ventilsitz 9 gelangen kann, stromabwärts dessen im Ventilsitzkörper 8 wenigstens eine Abspritzöffnung 17 ausgebildet ist.

Dem Ventilschließkörper 14 abgewandt ragt in die Innenbohrung 13 des Ankers 12 eine Rückstellfeder 18, die sich beispielsweise mit ihrem einen Ende an einem topfförmigen Federteller 19 in der Innenbohrung 13 abstützt. Der Federteller 19 liegt mit einem Kragen 20 an einer dem Kernende 2 zugewandten Ankerstirnfläche 25 an und bildet im erregten Zustand der Magnetspule 3 einen Restluftspalt zwischen Kernende 2 und Ankerstirnfläche 25. Das andere Ende der Rückstellfeder 18 ragt in eine Strömungsbohrung 21 des Anschlußstutzens 1 und liegt dort an einer rohrförmigen Verstellbuchse 22 an, die sich beispielsweise an einer in die Strömungsbohrung 21 eingeschraubten Schraubbuchse 23 zur Einstellung der Federspannung abstützt. Mindestens ein Teil des Anschlußstutzens 1 und die Magnetspule 3 in ihrer gesamten axialen Länge sind durch eine Kunststoffummantelung 24 umschlossen, die auch wenigstens noch einen Teil des Zwischenteils 6 umschließt. Die Kunststoffummantelung 24 kann durch Ausgießen oder Umspritzen mit Kunststoff erzielt werden. An der Kunststoffummantelung 24 ist zugleich ein elektrischer Anschlußstecker 26 angeformt, über den die elektrische Kontaktierung der Magnetspule 3 und damit deren Erregung erfolgt.

Die Magnetspule 3 ist von wenigstens einem als ferromagnetisches Element dienenden Leitelement 28 umgeben, das aus ferromagnetischem Material hergestellt ist und sich in axialer Richtung über die gesamte Länge der Magnetspule 3 erstreckt und die Magnetspule 3 in Umfangsrichtung wenigstens teilweise umgibt. Zusätzlich zu der Einbringung wenigstens eines Leitelementes 28 kann es zweckmäßig sein, ebenfalls als ferromagnetische Elemente dienende, magnetisch leitende Füllstoffe 27 in die Kunststoffummantelung in der Nähe der Magnetspule 3 aufzunehmen. Die Magnetfeldlinien leitenden, ferromagnetischen Füllstoffe 27 sind in der Zeichnung also Punkte dargestellt. Als Füllstoffe finden beispielsweise feinkörnig zerkleinerte Teile von Metallen mit weichmagnetischen Eigenschaften Verwendung. Zur besseren Ausrichtung der Füllstoffe 27 ist es zweckmäßig, während des Spritz- bzw. Ausgießvorganges der Kunststoffummantelung 24 und/oder deren Erstarrungsphase die Magnetspule 3 zu erregen.

Wie in Figur 2 als Einzelheit dargestellt, kann das Leitelement 28 nach Figur 1 in Form eines Bügels ausgebildet sein, mit einem an die Kontur der Magnetspule angepaßten gewölbten Mittelbereich 29, der nur teilweise in Umfangsrichtung die Magnetspule 3 umgibt und sich in radialer Richtung nach innen erstreckende Endabschnitte 31 hat, von denen beispielsweise der den Anschlußstutzen 1 teilweise umgreifende obere Endabschnitt 31 klauenförmig ausgebildet sein kann und der untere Endabschnitt 31 in ein in axialer Richtung verlaufendes Schalenende 32 übergeht, das am Zwischenteil 6 anliegt und dieses teilweise umgreift. In Figur 1 ist ein Ventil mit zwei Leitelementen 28 dargestellt.

Bei dem zweiten Ausführungsbeispiel nach Figur 3 sind die gegenüber dem ersten Ausführungsbeispiel nach den Figuren 1 und 2 gleichbleibenden und gleichwirkenden Teile durch die gleichen Bezugszeichen gekennzeichnet. Im Gegensatz zu dem Ausführungsbeispiel nach Figur 1 ist bei dem Ausführungsbeispiel nach Figur 3 das Leitelement 28 topfförmig ausgebildet und erstreckt sich mit einem Boden 33, das Zwischenteil 6 umgreifend, radial nach innen. Zwischen dem Anschlußstutzen 1 und dem offenen Ende des topfförmigen Leitelementes 28 kann sich radial eine deckelförmige Leitscheibe 34 aus ferromagnetischem Material zur Leitung der Magnetfeldkennlinien erstrecken.

Bei dem dritten Ausführungsbeispiel nach Figur 4 sind die gegenüber den bisherigen Ausführungsbeispielen gleichbleibenden und gleichwirkenden Teile durch die gleichen Bezugszeichen gekennzeichnet. So wird ebenfalls wie bei den bisherigen Ausführungsbeispielen die Magnetspule 3 durch eine Kunststoffummantelung 24 umgeben, in der wenigstens ein Leitelement 28 so eingebettet ist, daß es die Magnetspule 3 in axialer Richtung und in radialer Richtung übergreift und an jedem Ende Endabschnitte 31 bzw. Schalenenden 32 hat, die zur Führung der Magnetfeldlinien um die Magnetspule 3 herum dienen. Im Gegensatz zu den bisherigen Ausführungsbeispielen ist der Anker 12 zwar auch röhrenförmig, aber kürzer ausgebildet und mit einem Verbindungsrohr 36 verbunden, das an seinem anderen Ende mit dem als Kugel ausgebildeten Ventilschließkörper 14 verbunden ist. In der Wandung des Verbindungsrohres 36 sind die Wandung radial durchdringende Strömungsöffnungen 37 vorgesehen, durch die der vom Anker 12 im Inneren zuströmende Kraftstoff zum Ventilsitz 9 gelangen kann. Das ebenfalls nichtmagnetische und mit dem Anschlußstutzen 1 verbundene Zwischenteil 6 hat einen sich radial nach innen erstreckenden Führungsbund 38 mit einer sehr kurzen Führungsbohrung 11 zur Führung des Ankers 12. Mit dem Zwischenteil 6 ist ein Verbindungsteil 39 dicht verbunden, das ebenfalls rohrförmig aus ferromagnetischem Metall hergestellt ist und in das teilweise der Anker 12 mit Spiel ragt, so daß sich die Magnetfeldlinien über das Leitelement 28, Endabschnitt 31 und am Verbindungsteil 39 anliegendes unteres Schalenende 32 zum Anker hin schließen. Der Ventilsitzkörper 8 ist in eine zur Ventillängsachse 4 koaxiale Haltebohrung 41 des Verbindungsteils 39 eingesetzt und wird darin durch eine dieses umgreifende Bördelung 42 des Verbindungsteils 39 gehalten. Durch einen ebenfalls in die Haltebohrung 41 in axialer Richtung zwischen dem Ventilsitzkörper 8 und einem Bohrungsgrund 43 des Verbindungsteiles 39 eingelegten Zwischenring 44 kann der erforderliche Hub des Ventilschließgliedes 14 justiert werden. Bei dem Ausführungsbeispiel nach Figur 4 sind zwei Leitelemente 28 vorgesehen, die entsprechend der Darstellung in Figur 5 einander gegenüberliegend angeordnet sein können. Eine gleiche Anordnungsweise ist auch für das Ausführungsbeispiel nach Figur 1 zweckmäßig. Es kann auch aus räumlichen Gründen zweckmäßig sein, den elektrischen Anschlußstecker 26 in einer Ebene verlaufen zu lassen, die um 90° verdreht ist, also senkrecht auf einer Ebene durch die Leitelemente 28 steht. Weiterhin kann zusätzlich zu den Leitelementen 28 bei dem Ausführungsbeispiel nach Figur 4 die Kunststoffummantelung 24 ebenfalls in dem Bereich der Magnetspule 3 ferromagnetische Füllstoffe enthalten. Die Teile Anschlußstutzen 1, Zwischenteil 6, Verbindungsteil 39 und Ventilsitzkörper 8 bilden eine starr miteinander gekoppelte Einheit metallener Teile.

Bei dem vierten Ausführungsbeispiel nach Figur 6 sind die gegenüber den bisherigen Ausführungsbeispielen gleichbleibenden und gleichwirkenden Teile durch die gleichen Bezugszeichen gekennzeichnet. Dabei sind, wie ausführlich zu dem Ausführungsbeispiel nach Figur 4 erläutert, ebenfalls Leitelemente 28 in Form von Bügeln in die Kunststoffummantelung 24 eingebettet, die zur Führung der Magnetfeldlinien um die Magnetspule 3 herum dienen. Im wesentlichen abweichend von dem Ausführungsbeispiel nach Figur 4 ist bei dem Ventil nach Figur 6 das Zwischenteil 6 aus nichtmagnetischem Blech gefertigt, das tiefgezogen ist und koaxial zur Ventillängsachse 4 verlaufend einen ersten Verbindungsabschnitt 47 hat, mit dem es vollständig das Kernende 2 umgreift und mit diesem dicht verbunden ist, beispielsweise durch Verlöten oder Verschweißen. Ein sich vom ersten Verbindungsabschnitt 47 radial nach außen erstreckender Kragen 48 führt zu einem zweiten Verbindungsabschnitt 49 des Zwischenteiles 6, der sich koaxial zur Ventillängsachse 4 verlaufend erstreckt und in axialer Richtung das Verbindungsteil 39 teilweise überragt und mit diesem dicht verbunden ist, beispielsweise durch Verlöten oder Verschweißen. Der Durchmesser des zweiten Verbindungsabschnittes 49 ist somit größer als der Durchmesser des ersten Verbindungsabschnittes 47, so daß im montierten Zustand das rohrförmige Verbindungsteil 39 mit einer Stirnfläche 50 am Kragen 48 anliegt. Um kleine Außenmaße des Ventiles zu ermöglichen, umgreift der erste Verbindungsabschnitt 47 einen Halteabsatz 51 des Kernendes 2, der einen geringeren Durchmesser als der Anschlußstutzen 1 hat, und der zweite Verbindungsabschnitt 49 umgreift einen ebenfalls mit geringerem Durchmesser als im angrenzenden Bereich ausgebildeten Halteabsatz 52 des Verbindungsteiles 39.

Das aus ferromagnetischem Material gefertigte Verbindungsteil 39 hat der Stirnfläche 50 abgewandt die Haltebohrung 41, in die der Ventilsitzkörper 8 dicht eingesetzt ist. Die Haltebohrung 41 geht in eine Übergangsbohrung 53 über, an die sich in der Nähe der Stirnfläche 50 eine Gleitbohrung 54 anschließt in die der Anker 12 ragt und durch die der Anker 12 geführt wird. Somit können Haltebohrung 41 und Gleitbohrung 54 in einer Aufspannung bei der Fertigung hergestellt werden, so daß sich sehr genau zueinander fluchtende Bohrungen ergeben. Der Anker 12 wird bei diesem Ausführungsbeispiel weder durch das Zwischenteil 6 noch die Übergangsbohrung 53 des Verbindungsteiles 39 geführt. Die axiale Erstreckung der Gleitbohrung 54 ist im Vergleich zur axialen Länge des Ankers 12 gering, sie beträgt etwa 1/15 der Länge des Ankers. Am Kernende 2 des Anschlußstutzens 1 ist dem Anker 12 zugewandt ein ringförmiger, schmaler Anschlagbund 55 ausgebildet, dessen Breite etwa 0,2 mm beträgt.

Die Ausbildung der nicht vollständig den Umfang der Magnetspule 3 umschließenden Leitelemente 28 entsprechend den Figuren 1, 2, 4, 5 und 6 bewirkt außerdem, daß ein Auftreten von Wirbelströmen am Umfang des Ventiles vermieden wird.

Die beschriebene Kunststoffummantelung mit Leitelementen erlaubt bei allen beschriebenen Ausführungsbeispielen eine kompakte, schlankbauende Ventilkonstruktion, die eine einfache und kostengünstige Fertigung ermöglicht.

## Patentansprüche

1. Elektromagnetisch betätigbares Ventil, insbesondere Einspritzventil für Kraftstoffeinspritzanlagen von Brennkraftmaschinen, mit einem sich entlang einer Ventillängsachse erstreckenden ferromagnetischen, metallenen und als Kern dienenden Anschlußstutzen (1), auf dem eine Magnetspule (3) angeordnet ist, mit einem Anker (12), durch den ein mit einem festen Ventilsitz zusammenwirkender Ventilschließkörper (14) betätigbar ist, mit einem den festen Ventilsitz (9) aufweisenden metallenen Ventilsitzkörper (8) und einer einen Teil des Anschlußstutzens umgebenden Kunststoffummantelung (24), dadurch gekennzeichnet, daß die Kunststoffummantelung (24) ebenfalls die Magnetspule (3) umgibt und mindestens in dem die Magnetspule (3) umgebenden Teil der Kunststoffummantelung (24) Magnetfeldlinien leitende, ferromagnetische Elemente (27, 28) vorgesehen sind.

2. Ventil nach Anspruch 1, dadurch gekennzeichnet, daß in der Kunststoffummantelung (24) als ferromagnetisches Element dienend wenigstens ein aus ferromagnetischem Material hergestelltes Leitelement (28) so angeordnet ist, daß es sich in axialer Richtung über die gesamte Länge der Magnetspule (3) erstreckt und die Magnetspule (3) in Umfangsrichtung wenigstens teilweise umgibt.

3. Ventil nach Anspruch 2, dadurch gekennzeichnet, daß in der Kunststoffummantelung (24) als zusätzliche ferromagnetische Elemente dienende Füllstoffe (27) mit ferromagnetischen Eigenschaften eingeschlossen sind.

4. Ventil nach Anspruch 2, dadurch gekennzeichnet, daß das Leitelement (28) sich in radialer Richtung nach innen erstreckende Endabschnitte (31, 33, 34) hat.

5. Ventil nach Anspruch 4, dadurch gekennzeichnet, daß das Leitelement (28) topfförmig ausgebildet ist.

6. Ventil nach Anspruch 2, dadurch gekennzeichnet, daß mit einem dem Anker (12) zugewandten Kernende (2) des Anschlußstutzens (1) wenigstens ein sich in Richtung zum Ventilsitzkörper (8) hin erstreckendes rohrförmiges, metallenes Zwischenteil (6) verbunden ist.

7. Ventil nach Anspruch 6, dadurch gekennzeichnet, daß das Zwischenteil (6) aus nichtmagnetischem Material gefertigt ist und eine Führungsbohrung (11) zur Führung des Ankers (12) aufweist.

8. Ventil nach Anspruch 7, dadurch gekennzeichnet, daß das Zwischenteil (6) mit dem Ventilsitzkörper (8) verbunden ist.

9. Ventil nach Anspruch 8, dadurch gekennzeichnet, daß der Anker (12) rohrförmig ausgebildet und dem Ventilsitz (9) zugewandt mit dem Ventilschließkörper (14) verbunden ist.

10. Ventil nach Anspruch 7, dadurch gekennzeichnet, daß zwischen Zwischenteil (6) und Ventilsitzkörper (8) ein rohrförmiges Verbindungsteil (39) dicht angeordnet ist, das aus ferromagnetischem Material gefertigt ist und in das teilweise der Anker (12) mit Spiel ragt.

11. Ventil nach Anspruch 7 oder 10, dadurch gekennzeichnet, daß der Anker (12) mit einem Verbindungsrohr (36) verbunden ist, an dem der als Kugel ausgebildete Ventilschließkörper (14) befestigt ist.

12. Ventil nach Anspruch 6, dadurch gekennzeichnet, daß das Zwischenteil (6) aus nichtmagnetischem Blech gefertigt ist.

13. Ventil nach Anspruch 12, dadurch gekennzeichnet, daß das Zwischenteil (6) koaxial zur Ventillängsachse (4) verlaufend einen ersten Verbindungsabschnitt (47) und einen zweiten Verbindungsabschnitt (49) mit größerem Durchmesser hat und der erste Verbindungsabschnitt (47) durch einen sich radial nach außen erstreckenden Kragen (48) mit dem zweiten Verbindungsabschnitt (49) verbunden ist.

14. Ventil nach Anspruch 13, dadurch gekennzeichnet, daß der erste Verbindungsabschnitt (47) des Zwischenteiles (6) dicht mit dem Kernende (2) des Anschlußstutzens (1) und der zweite Verbindungsabschnitt (49) dicht mit einem rohrförmigen Verbindungsteil (39) verbunden ist, das mit einer Stirnfläche (50) am Kragen (48) anliegt.

15. Ventil nach Anspruch 14, dadurch gekennzeichnet, daß das aus ferromagnetischem Material gefertigte Verbindungsteil (39) der Stirnfläche (50) des Zwischenteiles (6) abgewandt mit dem Ventilsitzkörper (8) verbunden ist und eine Gleitbohrung (54) hat, in die der Anker (12) ragt und durch die der Anker (12) geführt wird.

16. Ventil nach Anspruch 15, dadurch gekennzeichnet, daß der Anker (12) mit einem Verbindungsrohr (36) verbunden ist, an dem der als Kugel ausgebildete Ventilschließkörper (14) befestigt ist.

17. Ventil nach Anspruch 16, dadurch gekennzeichnet, daß an dem Kernende (2) des Anschlußstutzens (1) dem Anker (12) zugewandt ein ringförmiger, schmaler Anschlagbund (55) ausgebildet ist.

## Claims

1. Electromagnetically operated valve, especially injection valve for fuel-injection systems of internalcombustion engines, with a ferromagnetic, metal connection piece (1) which extends along a longitudinal axis of the valve and serves as a core and on which is arranged a magnet coil (3), with an armature (12), by means of which a valve-closing body (14) interacting with a fixed valve seat can be operated, with a metal valve-seat body (8) having the fixed valve seat (5), and with a plastic casing (24) surrounding part of the connection piece, characterised in that the plastic casing (24) likewise surrounds the magnet coil (3), and ferromagnetic elements (27, 28) conducting magnetic flux lines are provided at least in the part of the plastic casing (24) surrounding the magnet coil (3).

2. Valve according to Claim 1, characterised in that at least one conductive element (28) produced from ferromagnetic material and serving as a ferromagnetic element in the plastic casing (24) is so arranged that it extends in the axial direction over the entire length of the magnet coil (3) and surrounds the magnet coil (3) at least partially in the circumferential direction.

3. Valve according to Claim 2, characterised in that fillers (27) having ferromagnetic properties and serving as additional ferromagnetic elements are included in the plastic casing (24).

4. Valve according to Claim 2, characterised in that the conductive element (28) has end portions (31, 33, 34) extending inwards in the radial direction.

5. Valve according to Claim 4, characterised in that the conductive element (28) is made pot-shaped.

6. Valve according to Claim 2, characterised in that at least one tubular metal intermediate part (6) extending in the direction of the valve-seat body (8) is connected to a core end (2) of the connection piece (1) facing the armature (12).

7. Valve according to Claim 6, characterised in that the intermediate part (6) is produced from non-magnetic material and has a guide bore (11) for guiding the armature (12).

8. Valve according to Claim 7, characterised in that the intermediate part (6) is connected to the valve-seat body (8).

9. Valve according to Claim 8, characterised in that the armature (12) is made tubular and, facing the valve seat (9), is connected to the valve-closing body (14).

10. Valve according to Claim 7, characterised in that arranged sealingly between the intermediate part (6) and the valve-seat body (8) is a tubular connecting part (39) which is produced from ferromagnetic material and into which the armature (12) partially projects with play.

11. Valve according to Claim 7 or 10, characterised in that the armature (12) is connected to a connecting tube (36), to which the valve-closing body (14) designed as a ball is fastened.

12. Valve according to Claim 6, characterised in that the intermediate part (6) is produced from non-magnetic sheet metal.

13. Valve according to Claim 12, characterised in that the intermediate part (6) has, extending coaxially relative to the longitudinal axis (4) of the valve, a first connecting portion (47) and a second connecting portion (49) of larger diameter, and the first connecting portion (47) is connected to the second connecting portion (49) by means of a collar (48) extending radially outwards.

14. Valve according to Claim 13, characterised in that the first connecting portion (47) of the intermediate part (6) is connected sealingly to the core end (2) of the connection piece (1) and the second connecting portion (49) sealingly to a tubular connecting part (39) which bears with one end face (50) against the collar (48).

15. Valve according to Claim 14, characterised in that the connecting part (39) produced from ferromagnetic material is connected, facing away from the end face (50) of the intermediate part (6), to the valve-seat body (8) and has a sliding bore (54), into which the armature (12) projects and by which the armature (12) is guided.

16. Valve according to Claim 15, characterised in that the armature (12) is connected to a connecting tube (36), to which the valve-closing body (14) designed as a ball is fastened.

17. Valve according to Claim 16, characterised in that a narrow annular stop flange (55) is formed, facing the armature (12), on the core end (2) of the connection piece (1).

## Revendications

1. Soupape électromagnétique, notamment soupape d'injection pour des installations d'injection de carburant de moteurs à combustion interne, avec une tubulure de raccordement (1) en un métal ferromagnétique et jouant le rôle de noyau, qui s'étend le long d'un axe longitudinal de la soupape et sur laquelle est disposée une bobine magnétique (3) avec une armature (12) par l'intermédiaire de laquelle un corps de fermeture de soupape (14) coopérant avec un siège de soupape fixe est susceptible d'être actionné, avec un corps de siège de soupape (8) métallique comportant le siège de soupape (9) fixe, et avec une enveloppe en matière plastique (24) entourant une partie de la tubulure de raccordement, soupape électromagnétique caractérisée en ce que l'enveloppe en matière plastique (24) entoure également la bobine magnétique (3) et en ce que, au moins dans la partie de l'enveloppe en matière plastique (24) entourant la bobine magnétique (3), il est prévu des éléments ferromagnétiques (27, 28) canalisant les lignes de force du champ magnétique.

2. Soupape selon la revendication 1, caractérisé en ce que dans l'enveloppe en matière plastique (24) est disposé, pour jouer le rôle d'élément ferromagnétique, au moins un élément conducteur (28) fabriqué en un matériau ferromagnétique, de façon qu'il s'étende en direction axiale sur toute la longueur de la bobine magnétique (3) et entoure au moins partiellement la bobine magnétique (3) en direction périphérique.

3. Soupape selon la revendication 2, caractérisé en ce que dans l'enveloppe en matière plastique (24) sont inclues, pour jouer le rôle d'éléments ferromagnétiques supplémentaires, des matières de remplissage (27) ayant des propriétés ferromagnétiques.

4. Soupape selon la revendication 2, caractérisé en ce que l'élément conducteur (28) a des parties d'extrémité (31, 33, 34) s'étendant en direction radiale vers l'intérieur.

5. Soupape selon la revendication 4, caractérisé en ce que l'élément conducteur (28) est en forme de cuvette.

6. Soupape selon la revendication 2, caractérisée en ce qu'à une extrémité (2), jouant le rôle de noyau et placée en regard de l'armature (12), de la tubulure de raccordement (1) est reliée au moins une pièce intermédiaire (6) métallique, de forme tubulaire, s'étendant en direction du corps de siège de soupape (8).

7. Soupape selon la revendication 6, caractérisée en ce que la pièce intermédiaire (6) est fabriquée en un matériau non magnétique et comporte un alésage de guidage (11) pour guider l'armature (12).

8. Soupape selon la revendication 7, caractérisée en ce que la pièce intermédiaire (6) est reliée au corps de siège de soupape (8).

9. Soupape selon la revendication 8, caractérisée en ce que l'armature (12) est de forme tubulaire et, en regard du siège de soupape (9), est reliée au corps de fermeture de soupape (14).

10. Soupape selon la revendication 7, caractérisée en ce que, entre la pièce intermédiaire (6) et le corps de siège de soupape (8) est disposée, de façon étanche, une pièce de liaison (39) de forme tubulaire qui est fabriquée en un matériau ferromagnétique et dans laquelle pénètre partiellement avec du jeu, l'armature (12).

11. Soupape selon la revendication 7 ou la revendication 10, caractérisée en ce que l'armature (12) est reliée à un tube de liaison (36) auquel est fixé le corps de fermeture de soupape (14) réalisé sous la forme d'une bille.

12. Soupape selon la revendication 6, caractérisée en ce que la pièce intermédiaire (6) est fabriquée en tôle non magnétique.

13. Soupape selon la revendication 12, caractérisée en ce que la pièce intermédiaire (6), s'étendant coaxialement à l'axe longitudinal (4) de la soupape, comporte une première partie de liaison (47) et une seconde partie de liaison (49) avec un diamètre plus grand, et que la première partie de liaison (47) est reliée à la seconde partie de liaison (49) par l'intermédiaire d'une collerette (48) s'étendant radialement vers l'extérieur.

14. Soupape selon la revendication 13, caractérisée en ce que la première partie de liaison (47) de la pièce intermédiaire (6) est reliée de façon étanche à l'extrémité (2), jouant le rôle de noyau, de la tubulure de raccordement (1), tandis que la seconde partie de liaison (49) est reliée de façon étanche à une pièce de liaison tubulaire (39) qui s'applique par une face frontale (50) contre la collerette (48).

15. Soupape selon la revendication 14, caractérisée en ce que la pièce de liaison (39) fabriquée en un matériau ferromagnétique est reliée, à l'opposé de la surface frontale (50) de la pièce intermédiaire (6), au corps de siège de soupape (8) et comporte un alésage de glissement (54) dans lequel pénètre l'armature (12) grâce auquel cette armature (12) est guidée.

16. Soupape selon la revendication 15, caractérisée en ce que l'armature (12) est reliée à un tube de liaison (36) auquel est fixé le corps de fermeture de soupape (14) réalisé sous forme de bille.

17. Soupape selon la revendication 16, caractérisée en ce qu'à l'extrémité (2), jouant le rôle de noyau, de la tubulure de raccordement (1), il est prévu, en regard de l'armature (12), un bandeau de butée (55) étroit et de forme annulaire.

FIG.1

FIG.2

FIG. 3

FIG. 4

FIG.5

FIG.6